# EUROPEAN PATENT APPLICATION

(11) **EP 3 387 977 A1**
(43) Date of publication of application: **17.10.2018**
(21) Application number: 16871931.8
(22) Date of filing: 04.03.2016
(51) Int. Cl.: A47L 9/04, A47L 5/22, A47L 9/28, A47L 9/00

(54) **VERTICAL CLEANER SCRUBBING BRUSH ASSEMBLY AND VERTICAL CLEANER HAVING THE SAME**

(30) Priority: 10.12.2015 CN 201510917499; 10.12.2015 CN 201521029002 U; 10.12.2015 CN 201510917466; 10.12.2015 CN 201521028726 U; 10.12.2015 CN 201510917497; 10.12.2015 CN 201521028730 U; 10.12.2015 CN 201521029087 U; 10.12.2015 CN 201510918662; 10.12.2015 CN 201521028812 U; 10.12.2015 CN 201510918544; 10.12.2015 CN 201521028739 U; 10.12.2015 CN 201510918580; 10.12.2015 CN 201521027156 U; 10.12.2015 CN 201510917498; 10.12.2015 CN 201521027158 U; 10.12.2015 CN 201521028814 U; 10.12.2015 CN 201521028779 U; 10.12.2015 CN 201521029798 U; 10.12.2015 CN 201510918541; 10.12.2015 CN 201521027550 U; 10.12.2015 CN 201510917653; 10.12.2015 CN 201521028784 U; 10.12.2015 CN 201510917528; 10.12.2015 CN 201521028913 U; 10.12.2015 CN 201521030034 U; 01.03.2016 CN 201610114861; 01.03.2016 CN 201620155481 U
(71) Applicant: Jiangsu Midea Cleaning Appliances Co., Ltd., Xiangcheng Economic Development Zone Suzhou, Jiangsu 215100 (CN)
(72) Inventor: HU, Wei, Suzhou Jiangsu 215100 (CN); ZOU, Hui, Suzhou Jiangsu 215100 (CN); XIAO, Xiahu, Suzhou Jiangsu 215100 (CN)
(74) Representative: RGTH
(86) International application number: PCT/CN2016/075612
(87) International publication number: WO 2017/096723

(57) **Abstract**

A floor brush assembly for an upright vacuum cleaner (1) and an upright vacuum cleaner (1) having the same are provided, in which the floor brush assembly for the upright vacuum cleaner (1) includes: a brushroll (11); and an electric motor (22) having a rotation axis disposed non-parallel to a rotation axis of the brushroll (11), and configured to drive the brushroll (11) to roll by a drive belt (13).

## Description

### FIELD

The present disclosure relates to a field of cleaning machineries, and more particularly to a floor brush assembly for an upright vacuum cleaner and an upright vacuum cleaner having the same.

### BACKGROUND

A vacuum cleaner in the related art includes two electric motors so as to drive a brushroll and a fan respectively, in which the electric motor driving the fan is in general arranged horizontally, i.e. a motor shaft of the electric motor is parallel to a mounting platform of the electric motor, such that a motor housing of the electric motor has a too large volume, increasing an occupied area of the electric motor. Meanwhile, the electric motor which is arranged horizontally will bring a great limit to arrangements of other parts in the vacuum cleaner.

### SUMMARY

Embodiments of the present disclosure seek to solve at least one of the problems existing in the related art to at least some extent. For that reason, a floor brush assembly for an upright vacuum cleaner is provided by the present disclosure. The floor brush assembly for the upright vacuum cleaner has a simple and compact structure and occupies a small space, which is beneficial to realizing various arrangements of parts.

An upright vacuum cleaner having the floor brush assembly is further provided by the present disclosure.

The floor brush assembly for the upright vacuum cleaner according to embodiments of a first aspect of the present disclosure includes a brushroll and an electric motor, a rotation axis of the electric motor is disposed non-parallel to a rotation axis of the brushroll, and the electric motor is configured to drive the brushroll to roll by a drive belt.

In the floor brush assembly for the upright vacuum cleaner according to embodiments of the present disclosure, by disposing the rotation axis of the electric motor non-parallel to the rotation axis of the brushroll, a volume of the electric motor may be reduced, thus reducing an occupied space of the upright vacuum cleaner, and facilitating various arrangements of parts of the upright vacuum cleaner. Moreover, the upright vacuum cleaner controls rotations of the brushroll and a fan at the same time by one electric motor, which reduces the number of parts, occupies a small space, and achieves the synchronous control over dust sweep and dust suction. Furthermore, the electric motor of the upright vacuum cleaner is arranged vertically, which may reduce the occupied space of the upright vacuum cleaner and facilitate various arrangements of parts of the upright vacuum cleaner. The upright vacuum cleaner has a simple and compact structure, occupies a small space and is easy to operate.

According to an embodiment of the present disclosure, the drive belt is configured as a cylindrical belt and is twined around an electric motor shaft of the electric motor and the brushroll.

According to an embodiment of the present disclosure, the drive belt is configured as a flat belt or a trapezoidal belt and is twined around the electric motor shaft of the electric motor, the brushroll and at least one guide pulley.

According to an embodiment of the present disclosure, contact points between the drive belt and parts twined by the drive belt are configured as alterable contact points, and a twist angle of the drive belt between two adjacent alterable contact points is configured to range from 30° to 90°.

According to an embodiment of the present disclosure, the rotation axis of the electric motor is disposed perpendicular to the rotation axis of the brushroll, and the drive belt is provided with a twist angle of 90°.

According to an embodiment of the present disclosure, the electric motor shaft of the electric motor is disposed vertically.

According to an embodiment of the present disclosure, the floor brush assembly further includes a stopper disposed below the drive belt and adjacent to the electric motor so as to prevent the drive belt from falling off and slipping off from the electric motor shaft.

According to an embodiment of the present disclosure, the drive belt is twined around a midpoint portion in the axial direction of the brushroll.

According to an embodiment of the present disclosure, the brushroll includes a first brushroll segment provided with bristles, a second brushroll segment provided with bristles and a connecting shaft segment connected between the first brushroll segment and the second brushroll segment, and the drive belt is twined around the electric motor shaft of the electric motor and the connecting shaft segment so that the electric motor drives the brushroll to rotate.

According to an embodiment of the present disclosure, the brushroll further includes a first baffle plate disposed between the connecting shaft segment and the first brushroll segment so as to separate the connecting shaft segment from the first brushroll segment; and a second baffle plate disposed between the connecting shaft segment and the second brushroll segment so as to separate the connecting shaft segment from the second brushroll segment.

According to an embodiment of the present disclosure, the first brushroll segment includes a first body and a first bristle provided to the first body, and the second brushroll segment includes a second body and a second bristle provided to the second body.

According to an embodiment of the present disclosure, a plurality of the first bristles are provided and each of the first bristles is spirally coiled around the first body in the same direction, a plurality of the second bristles are provided and each of the second bristle is spirally coiled around the second body in the same direction.

According to an embodiment of the present disclosure, the coiled directions of the first bristle and the second bristle are contrary.

According to an embodiment of the present disclosure, the first brushroll segment and the second brushroll segment are symmetrical relative to the drive belt.

According to an embodiment of the present disclosure, respective center axes of the first brushroll segment, the second brushroll segment and the connecting shaft segment are in the same line.

According to an embodiment of the present disclosure, the floor brush assembly also includes a brushroll casing covering the brushroll, and internally provided with a drive belt mounting cavity for accommodating the connecting shaft segment and the drive belt, and a first air suction flow passage and a second air suction flow passage located at two sides of the mounting cavity and spaced from the mounting cavity.

According to an embodiment of the present disclosure, each of the first air suction flow passage and the second air suction flow passage includes a transverse air suction flow passage segment and a longitudinal air suction flow passage segment, the transverse air suction flow passage segment extends along an axial direction of the brushroll, and the longitudinal air suction flow passage segment extends along a direction perpendicular to the axial direction of the brushroll and communicated with the transverse air suction flow passage segment correspondingly.

According to an embodiment of the present disclosure, the brushroll casing includes a lower casing and an upper casing connected to a top portion of the lower casing, and the first air suction flow passage and the second air suction flow passage are defined by the upper casing and/or the lower casing.

According to an embodiment of the present disclosure, the floor brush assembly further includes a tensioning pulley, and the tensioning pulley is opposite to a part of the drive belt adjacent to the brushroll so as to tension the drive belt.

According to an embodiment of the present disclosure, the floor brush assembly further includes a brushroll casing covering the brushroll, and internally provided with a brushroll air suction flow passage and the drive belt mounting cavity for mounting the drive belt, and the brushroll air suction flow passages is separated from the drive belt.

According to an embodiment of the present disclosure, the brushroll air suction flow passage includes a first air suction flow passage and a second air suction flow passage at two sides of the drive belt mounting cavity.

According to an embodiment of the present disclosure, the first air suction flow passage and the second air suction flow passage are symmetrically disposed at two sides of the drive belt.

The upright vacuum cleaner according to embodiments of a second aspect of the present disclosure includes the floor brush assembly according to the above embodiments.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

Fig. 1 is a schematic view of an upright vacuum cleaner according to an embodiment of the present disclosure;
Fig. 2 is a lateral view of the upright vacuum cleaner shown in Fig. 1, in which an electric motor is at a first inclined position;
Fig. 3 a lateral view of the upright vacuum cleaner shown in Fig. 1, in which an electric motor is at a first vertical position;
Fig. 4 is a schematic view of the upright vacuum cleaner shown in Fig. 1 from one direction;
Fig. 5 is a schematic view of an upright vacuum cleaner according to another embodiment of the present disclosure;
Fig. 6 is a lateral view of the upright vacuum cleaner shown in Fig. 5;
Fig. 7 is an assembly view of a floor brush assembly for an upright vacuum cleaner according to an embodiment of the present disclosure;
Fig. 8 is an assembly view of a floor brush assembly for an upright vacuum cleaner according to another embodiment of the present disclosure;
Fig. 9 is a top view of the structure shown in Fig. 8;
Fig. 10 is a lateral view of the structure shown in Fig. 7;
Fig. 11 is a bottom view of the structure shown in Fig. 7;
Fig. 12 is schematic view of a flow passage in the structure shown in Fig. 11;
Fig. 13 is a rear view of a flow passage in the structure shown in Fig. 8;
Fig. 14 is a schematic view of a brushroll of an upright vacuum cleaner according to embodiments of the present disclosure;
Fig. 15 is a front view of the brushroll of the upright vacuum cleaner shown in Fig. 14;
Fig. 16 is a schematic view of a bridging member of an upright vacuum cleaner according to embodiments of the present disclosure.

Reference numerals:
1 upright vacuum cleaner;
100 brushroll assembly; 11 brushroll; 111 first brushroll segment; 1111 first body; 1112 first bristle; 112 second brushroll segment; 1121 second body; 1122 second bristle; 113 connecting shaft segment; 114 first baffle plate; 115 second baffle plate; 12 brushroll casing; 122 brushroll air suction flow passage; 1221 first air suction flow passage; 1222 second air suction flow passage; 123 drive belt mounting cavity; 124 upper casing; 125 lower casing; 13 drive belt; 14 tensioning pulley;
200 electric motor assembly; 21 electric motor housing; 211 dirty air outlet; 212 clean air inlet; 213 air exhaust hole; 214 dirty air output pipe; 215 clean air input pipe; 216 electric motor air suction flow passage; 2161 first branch flow passage; 2162 second branch flow passage; 22 electric motor; 221 electric motor shaft; 222 electric motor casing;
300 machine body assembly; 31 machine body; 311 machine body air exhaust flow passage; 32 bridging member; 321 top plate; 322 lateral plate; 37 dust cup; 371 separating chamber; 372 air inlet; 373 air outlet; 38 rolling wheel; 39 air exhaust pipe;
51 air inlet pipe; 52 hose.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

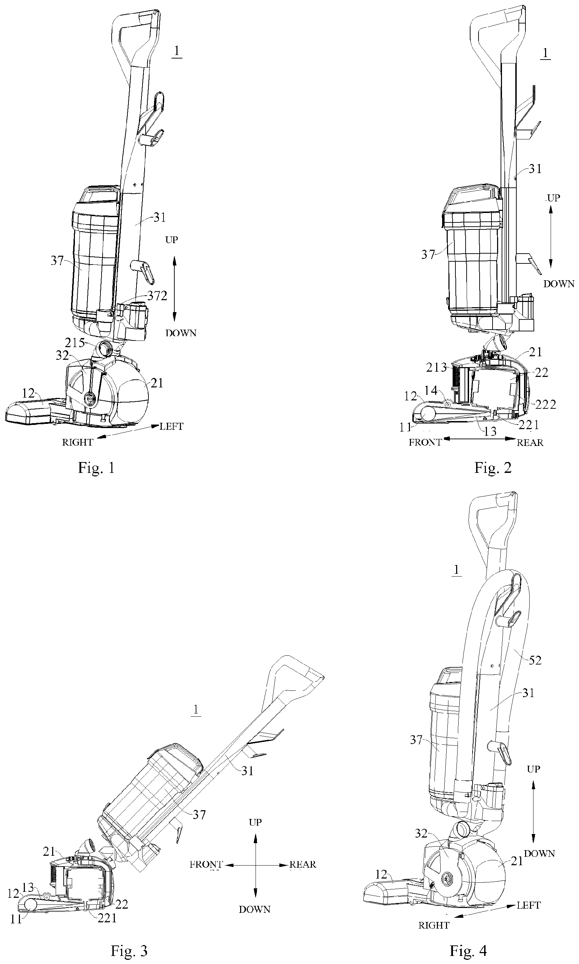

A floor brush assembly for an upright vacuum cleaner 1 according to embodiments of a first aspect of the present disclosure will be described in the following with reference to Figs. 1-16.

The floor brush assembly for the upright vacuum cleaner 1 according to embodiments of the present disclosure includes a brushroll 11 and an electric motor 22. Specifically, the electric motor 22 is disposed in an electric motor housing 21 of the vacuum cleaner, and the electric motor 22 is connected with the brushroll 11 and a fan. The electric motor 22 may drive the fan to rotate so as to generate an air flow for dust suction, thereby providing the upright vacuum cleaner 1 with a vacuuming power, and the electric motor 22 may further drive the brushroll 11 to rotate around its own axis, thereby achieving an objective of cleaning the floor.

Furthermore, a rotation axis of the electric motor 22 is disposed non-parallel to a rotation axis of the brushroll 11, the electric motor 22 drives the brushroll 11 to roll by the drive belt 13. Specifically, as shown in Fig. 1, the rotation axis of the brushroll 11 extends along a horizontal direction (a left-right direction shown in Fig. 1), and the rotation axis of the electric motor 22 is disposed non-parallel to the rotation axis of the brushroll 11. For example, the rotation axis of the electric motor 22 may extend along the vertical direction (an up-down direction shown in Fig. 2), and may also be disposed obliquely with respect to the vertical direction. The drive belt 13 is disposed between the electric motor 22 and the brushroll 11, and the drive belt 13 is connected with the electric motor 22 and the brushroll 11, such that the electric motor 22 is able to drive the brushroll 11 by the drive belt 13.

Optionally, the electric motor 22 may be disposed adjacent to the floor, that is, a center of gravity of the electric motor 22 is lower than the center of gravity of the electric motor 22 of the vacuum cleaner in the related art, such that with regard to the vacuum cleaner having the machine body 31 of the same length, the upright vacuum cleaner 1 of the present disclosure is easy for the user to operate with less effort. The start and stop of the upright vacuum cleaner 1 is implemented by manual control over a switch on the machine body 31 of the upright vacuum cleaner 1. When the upright vacuum cleaner 1 is started, the electric motor 22 drives the fan and the brushroll 11 to rotate at the same time, thereby providing the power for dust suction. The user can complete various operations simply and conveniently by one button.

Thus, in the floor brush assembly for the upright vacuum cleaner 1 according to embodiments of the present disclosure, by disposing the rotation axis of the electric motor 22 non-parallel to the rotation axis of the brushroll 11, the volume of the electric motor 22 may be reduced, thus reducing the occupied space of the upright vacuum cleaner 1, and facilitating diverse arrangements of various parts of the upright vacuum cleaner 1. Moreover, the upright vacuum cleaner 1 controls the brushroll 11 and the fan to rotate at the same time by one electric motor 22, such that the number of parts is reduced, the occupied space is small, and the synchronous control over dust sweep and dust suction may be implemented. Furthermore, the electric motor of the upright vacuum cleaner 1 is arranged vertically, which may reduce the occupied space of the upright vacuum cleaner 1 and facilitate diverse arrangements of various parts of the upright vacuum cleaner 1. The floor brush assembly of the upright vacuum cleaner 1 has a simple and compact structure, occupies a small space, and is easy to operate.

In some embodiments of the present disclosure, the drive belt 13 is twined around an electric motor shaft 221 of the electric motor 22 and the brushroll 11. The drive belt 13 is configured as a ring shape. A first end of the drive belt 13 is twined around the electric motor shaft 221 of the electric motor 22 and a second end of the drive belt 13 is twined around the brushroll 11. Since the rotation axis of the electric motor 22 (i.e., a rotation axis of the electric motor shaft 221 of the electric motor 22) is disposed non-parallel to the rotation axis of the brushroll 11, a twist occurs between two ends of the drive belt 13.

Referring to Fig. 2 and Fig. 3, the brushroll 11 and the electric motor 22 are spaced apart from each other along a front-rear direction, and the brushroll 11 is located in front of the electric motor 22. The first end of the drive belt 13 is fitted over the electric motor shaft 221 of the electric motor

22 and the second end of the drive belt 13 is fitted over the connecting shaft segment 113 of the brushroll 11. When the electric motor shaft 221 of the electric motor 22 rotates, due to friction resistance between the electric motor shaft 221 and a belt surface of the drive belt 13, the electric motor shaft 221 drives the drive belt 13 to rotate. Likewise, as the friction resistance is provided between the connecting shaft segment 113 of the brushroll 11 and the belt surface of the drive belt 13, the drive belt 13 drives the brushroll 11 to rotate around its own axis. Thus the electric motor 22 is able to drive the brushroll to rotate. By disposing the drive belt 13 between the electric motor 22 and the brushroll 11, the electric motor 22 may drive the fan and the brushroll 11 to rotate at the same time. Compared to the vacuum cleaner of the relate art that controls the fan and the brushroll 11 to rotate by two electric motors 22 respectively, the floor brush of the upright vacuum cleaner 1 has a simple structure and few parts, occupies a small space, is convenient to assemble and disassemble with a high mounting efficiency, and may realize the synchronous control over dust sweep and dust suction.

A contact point between the drive belt 13 and parts twined by the drive belt 13 is alterable, and a twist angle of the drive belt 13 between two adjacent alterable contact points is configured to range from 30° to 90°.

Specifically, the first end of the ring-shaped drive belt 13 wraps at least part of a side wall of the brushroll 11, and the second end of the ring-shaped drive belt 13 wraps at least part of a side wall of the electric motor shaft 221 of the electric motor 22. The belt surface of the drive belt 13 connected to the brushroll 11 extends along an axial direction of the brushroll 11, while the belt surface of the drive belt 13 connected to the electric motor shaft 221 of the electric motor 22 extends along an axial direction of the electric motor shaft 221. As the axial direction of the electric motor shaft 221 of the electric motor 22 is disposed non-parallel to the axial direction of the brushroll 11, the drive belt 13 between the brushroll 11 and the electric motor shaft 221 is is twisted for one time with the twist angle of 30°-90°. It should be noted that, when the drive belt 13 is configured as the ring shape, an upper half of the drive belt 13 and a lower half of the drive belt 13 are both twisted with the same twist angle for one time between the brushroll 11 and the electric motor shaft 221.

In some other embodiments of the present disclosure, the drive belt 13 is twined around the electric motor shaft 221 of the electric motor 22, the brushroll 11 and at least one guide pulley. The drive belt 13 is configured as a ring shape, the belt surface of the drive belt 13 is twined around the electric motor shaft 221 of the electric motor 22, the brushroll 11 and at least one guide pulley. For example, when one guide pulley is provided, the first end of the drive belt 13 is twined around the electric motor shaft 221 of the electric motor 22, the second end of the drive belt 13 is twined around the brushroll 11, and the guide pulley is disposed between the electric motor 22 and the brushroll 11 and abuts against the belt surface of the drive belt 13 located above the guide pulley, so that the upper half of the drive belt 13 may be twisted tiwce. Certainly, the present disclosure is not limited to this, a plurality of guide pulleys may be provided, so that the drive belt 13 may be twisted for many times.

Furthermore, in the present embodiment, the contact points of the drive belt 13 with the electric motor shaft 221 of the electric motor 22, the brushroll 11, and the guide pulley are configured as the alterable contact points, and the twist angle of the drive belt 13 between two adjacent alterable contact points is configured to range from 30° to 90°. For example, one guide pulley is disposed between the electric motor shaft 221 and the brushroll 11, in which, the twist angle of the drive belt 13 between the alterable contact points of the drive belt 13 with the electric motor shaft 221 of the electric motor 22 and the guide pulley is 30°, and the twist angle of the drive belt 13 between the two alterable contact points of the drive belt 13 with the guide pulley and the brushroll 11 is 60°.

Thus, by providing the drive belt 13 twistedly between the electric motor shaft 221 and the brushroll 11, a direction alterable movement may be implemented, so that the rotation of the electric motor shaft 221 may be transferred to the rotation of the brushroll 11, and the transmission of movement and power is easy to implement. By twining the drive belt 13 around the electric motor shaft 221, the brushroll 11 and at least one guide pulley, the operation of the drive belt 13 may be more steady and reliable, to ensure that the dust sweep and dust suction of the upright vacuum cleaner 1 are conducted synchronously.

In an embodiment of the present disclosure, the rotation axis of the electric motor 22 is disposed perpendicular to the rotation axis of the brushroll 11, and the drive belt 13 is provided with the twist angle of 90°. Referring to Fig. 1, the brushroll 11 is arranged in a horizontal plane, and the rotation axis of the brushroll 11 extends along a horizontal direction. The electric motor 22 is disposed vertically in the electric motor housing 21 and the electric motor shaft 221 of the electric motor 22 is disposed in the vertical plane perpendicular to the rotation axis of the brushroll 11, that is, the rotation axis of the electric motor shaft 221 of the electric motor 22 and the rotation axis of the brushroll 11 are perpendicular to each other. Thus, the upper half of the drive belt 13 and the lower half of the drive belt 13 are both twisted between the brushroll 11 and the electric motor shaft 221 for one time, and the twist angle of the two ends of each half of the drive belt 13 is configured as 90°.

Optionally, according to an embodiment of the present disclosure, the electric motor shaft 221 of the electric motor 22 is disposed vertically. Specifically, the electric motor 22 mainly includes an electric motor body and the electric motor casing 222. The electric motor body is disposed in the electric motor casing 222, and mainly includes a motor core and the electric motor shaft 221. The electric motor shaft 221 of the electric motor 22 is connected to the motor core of the electric motor 22, and the electric motor 22 is arranged vertically. When the upright vacuum cleaner 1 is under a non-working state, an upper end of the electric motor shaft 221 is inclined backwards with respect to the vertical direction (the up-down direction shown in Fig. 3). When the upright vacuum cleaner 1 is vacuuming, a center axis of the electric motor shaft 221 extends along the vertical direction, that is, the lower end of the electric motor shaft 221 of the upright vacuum cleaner 1 may extend downwards with respect to the motor core along the vertical direction (the up-down direction shown in Fig. 3). A first end of the drive belt 13 is fitted over the lower end of the electric motor shaft 221, and a second end of the drive belt 13 is fitted over the brushroll 11. As the rotation axis of the brushroll 11 is arranged in the vertical plane, the drive belt 13 is twisted at least one time between the brushroll 11 and the electric motor shaft 221, i.e. the twist angle of the drive belt 13 between an alterable contact point of the drive belt 13 with the electric motor shaft 221 and an alterable contact point of the drive belt 13 with the brushroll 11 is configured as 90°.

When the machine body 31 is at the vertical position, the axis of the electric motor shaft 221 of the electric motor 22 is inclined backwards with respect to the axis of the electric motor housing 21. In such a case, the two ends of the drive belt 13 are fitted over the brushroll 11 and the electric motor shaft 221 respectively, but the drive belt 13 is in the loosened state. When the machine body 31 is at the inclined position, the axis of the electric motor 22 extends along the vertical direction, i.e. the electric motor 22 is at the vertical position, and at this time, the drive belt 13 is tensioned. Specifically, when the machine body 31 is operated by hand from the vertical position to the inclined position, the lower end of the electric motor shaft 221 moves backwards gradually, so that the distance between the lower end of the electric motor shaft 221 and the brushroll 11 is increased, thereby tensioning the drive belt 13.

The floor brush assembly for the upright vacuum cleaner 1 further includes a stopper (not shown) disposed below the drive belt 13 and adjacent to the electric motor 22 so as to prevent the drive belt 13 from falling off and slipping off from the electric motor shaft 221. For example, the stopper may be configured as a snap ring provided to the electric motor shaft 221. The snap ring may be provided to a free end of the electric motor shaft 221 so that the first end of the drive belt 13 connected to the electric motor shaft 221 is located above the snap ring, thereby avoiding the drive belt 13 from slipping off from the electric motor shaft 221. The stopper may be formed by a structure of the free end itself of the electric motor shaft 221. Certainly, the present disclosure is not limited to this, and the stopper may also be provided to other parts below the drive belt 13, thereby avoiding the drive belt 13 from slipping off from the electric motor shaft 221. Thus, by providing the stopper below the drive belt 13, the drive belt 13 may be prevented from slipping off from the electric motor shaft 221, so as to ensure the reliability of operation of the drive belt 13 and hence the normal working of the upright vacuum cleaner 1.

In some embodiments of the present disclosure, the second end of the drive belt 13 is fitted over the brushroll 11 and is located at a middle portion of the brushroll 11. The brushroll 11 at two sides of the drive belt 13 sweeps the dust respectively, then the dust and dirty air are sucked into the brushroll casing 12 through the dust suction inlet and enters the dust cup 37 to be filtered, and in the end the clean air is discharged from an air exhaust hole 213 of the electric motor housing 21. It should be noted that, the term "middle portion" is a relative term, which could be interpreted as a portion between a left end and a right end of the brushroll 11, and is not limited to a midpoint of the brushroll 11. Specifically, the middle portion may be a part between the midpoint and the left end of the brushroll 11, and may also be a part between the midpoint and the right end of the brushroll 11.

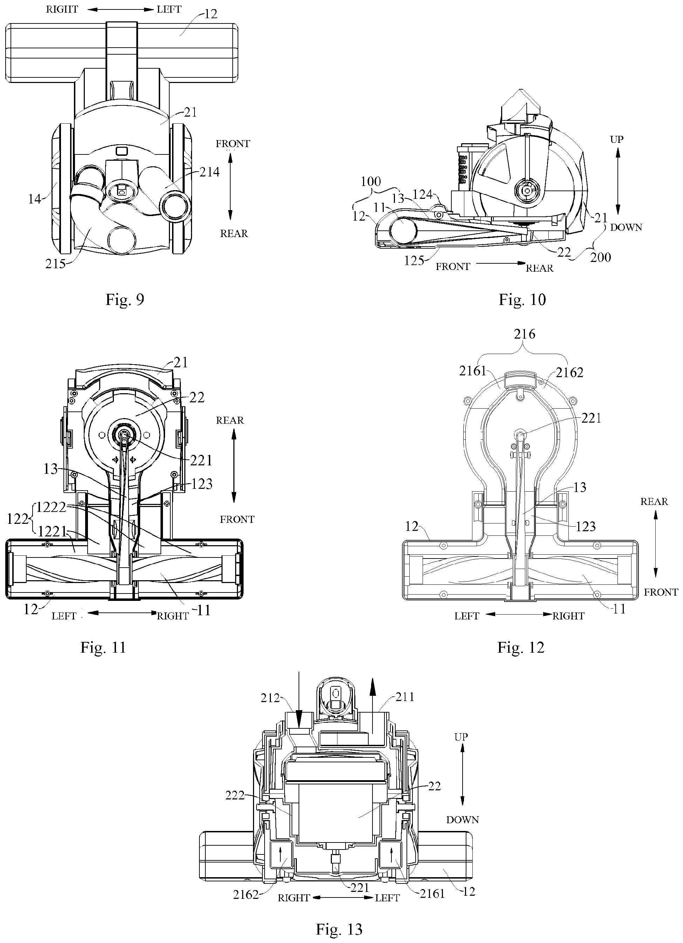

Preferably, according to an embodiment of the present disclosure, the drive belt 13 is twined around a midpoint portion in the axial direction of the brushroll 11. Referring to Fig. 9- Fig. 11, the second end of the drive belt 13 is fitted over the midpoint portion in the axial direction of the brushroll 11, i.e., the drive belt 13 divides the brushroll 11 into two parts which are symmetrical in the left-right direction.

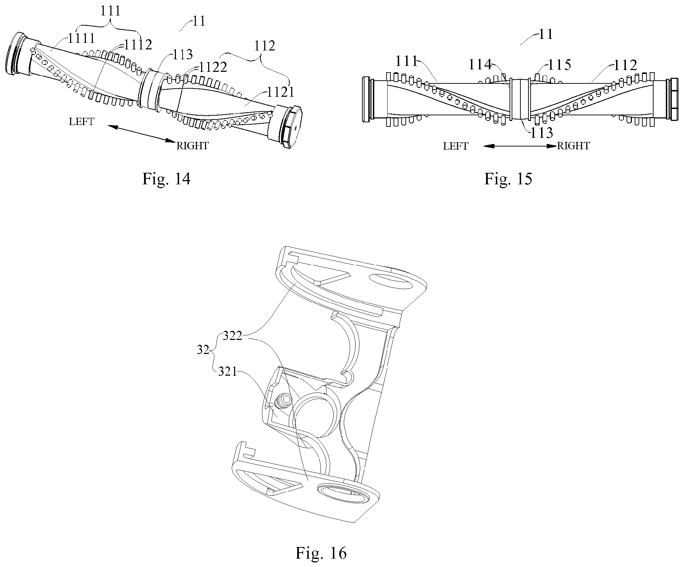

As shown in Fig. 14 and Fig. 15, the brushroll 11 includes a first brushroll segment 111 provided with bristles, a second brushroll segment 112 provided with bristles, and a connecting shaft segment 113 connected between the first brushroll segment 111 and the second brushroll segment 112. An end of the first brushroll segment 111 and an end of the second brushroll segment 112 are connected to two ends of the connecting shaft segment 113 correspondingly.

Referring to Fig. 1 and Fig. 2, the brushroll 11 is rotatably disposed in the brushroll casing 12, and the electric motor 22 is connected to the brushroll 11 so as to drive the brushroll 11 to rotate around its rotation axis. Each of the first brushroll segment 111, the second brushroll segment 112 and the connecting shaft segment 113 of the brushroll 11 is configured as a column shape extending along the horizontal direction (the left-right direction as shown in Fig. 14). A right end of the first brushroll segment 111 is connected to a left end of the connecting shaft segment 113, and a left end of the second brushroll segment 112 is connected to a right end of the connecting shaft segment 113. Outer side walls of the first brushroll segment 111 and the second brushroll segment 112 may be provided with the bristle so as to clean the floor. The connecting shaft segment 113 is not provided with the bristle so as to be convenient for connection with the drive belt 13.

Furthermore, the drive belt 13 is twined around the electric motor shaft 221 of the electric motor 22 and the connecting shaft segment 113 so that the electric motor 22 may drive the brushroll 11 to rotate. Referring to Fig. 2, the electric motor 22 is disposed in the electric motor housing 21 of the vacuum cleaner, and the electric motor 22 is connected to the fan and the brushroll 11. The electric motor 22 may drive the fan to rotate to generate the air flow, thereby providing the vacuuming power, and the electric motor 22 may drive the brushroll 11 to rotate around its own axis, thereby implementing the objective of cleaning the floor.

Referring to Fig. 2, the brushroll 11 and the electric motor 22 are spaced apart from each other along a front-rear direction, and the brushroll 11 is located in front of the electric motor 22. The first end of the drive belt 13 is fitted over the electric motor shaft 221 of the electric motor 22 and the second end of the drive belt 13 is fitted over the connecting shaft segment 113 of the brushroll 11. When the electric motor shaft 221 of the electric motor 22 rotates, due to friction resistance between the electric motor shaft 221 and a belt surface of the drive belt 13, the electric motor shaft 221 drives the drive belt 13 to rotate. Likewise, as the friction resistance is provided between the connecting shaft segment 113 of the brushroll 11 and the belt surface of the drive belt 13, the drive belt 13 drives the brushroll 11 to rotate around its own axis. Thus the electric motor 22 is able to drive the brushroll to rotate.

Thus, by disposing the drive belt 13 between the electric motor 22 and the brushroll 11, the electric motor 22 may drive the fan and the brushroll 11 to rotate at the same time. Compared to the vacuum cleaner of the relate art that controls the fan and the brushroll 11 to rotate by two electric motors 22 respectively, the upright vacuum cleaner 1 of the present disclosure has the simple structure and few parts, occupies the small space, is easy to assemble and disassemble along with a high mounting efficiency, and may realize the synchronous control over dust sweep and dust suction. Furthermore, the electric motor of the upright vacuum cleaner 1 is arranged vertically, which may reduce the occupied space of the upright vacuum cleaner 1 and facilitate various arrangements of parts of the upright vacuum cleaner 1. The structure is simple and compact, the assembly and disassembly are easy and the working efficiency is high.

The brushroll 11 further includes a first baffle plate 114 and a second baffle plate 115. Specifically, the first baffle plate 114 is disposed between the connecting shaft segment 113 and the first brushroll segment 111 so as to separate the connecting shaft segment 113 from the first brushroll segment 111, the second baffle plate 115 is disposed between the connecting shaft segment 113 and the second brushroll segment 112 so as to separate the connecting shaft segment 113 from the second brushroll segment 112.

Referring to Fig. 14 and Fig. 15, the brushroll 11 mainly includes the first brushroll segment 111, the second brushroll segment 112, the connecting shaft segment 113, the first baffle plate 114 and the second baffle plate 115. The first baffle plate 114 and the second baffle plate 115 are disposed at left and right ends of the connecting shaft segment 113 respectively. Specifically, the first baffle plate 114 is disposed between the connecting shaft segment 113 and the first brushroll segment 111, and left and right sides of the first baffle plate 114 are connected with a right end of the first brushroll segment 111 and a left end of the connecting shaft segment 113 respectively. The second baffle plate 115 is disposed between the connecting shaft segment 113 and the second brushroll segment 112, and left and right sides of the second baffle plate 115 are connected with a right end of the connecting shaft segment 113 and a left end of the second brushroll segment 112 respectively.

Thus, the first baffle plate 114 and the second baffle plate 115 are disposed at two ends of the connecting shaft segment 113 respectively, which not only serve for positioning, but also prevent the drive belt 13 from slipping off from the connecting shaft segment 113, i.e., the drive belt 13 is avoided from slipping off to the first brushroll segment 111 or the second brushroll segment 112, thereby avoiding influencing the operation of the drive belt 13.

Furthermore, the floor brush assembly of the upright vacuum cleaner 1 further includes a brushroll casing 12. Referring to Fig. 9, the brushroll casing 12 is formed to be T-shaped, in which, the brushroll casing 12 is internally provided with a first air suction flow passage 1221, a second air suction flow passage 1222 and a drive belt mounting cavity 123 spaced from each other in the left-right direction. The first brushroll segment 111 is rotatably disposed in the first air suction flow passage 1221, the second brushroll segment 112 is rotatably disposed in the second air suction flow passage 1222, and the drive belt 13 is rotatably disposed in the drive belt mounting cavity 123.

The first air suction flow passage 1221 and the second air suction flow passage 1222 which are spaced apart from each other are disposed at the left side and the right side of the drive belt 13 correspondingly, so that dirty air, dust and the like which are sucked from a dust suction inlet of the brushroll casing 12 may enter the first air suction flow passage 1221 and the second air suction flow passage 1222, then converge and flow into a dust cup 37. Specifically, the first air suction flow passage 1221 and the second air suction flow passage 1222 may be defined by parts disposed in the brushroll casing 12, and also may be defined by an inner wall surface of the brushroll casing 12. Certainly, the present disclosure is not limited to this, the first air suction flow passage 1221 and the second air suction flow passage 1222 may also be communicated with each other, i.e. all the space in the brushroll casing 12, apart from the space occupied by the drive belt mounting cavity 123, belongs to the first air suction flow passage 1221 and the second air suction flow passage 1222, and the dirty air, dust and the like which are sucked from the dust suction inlet of the brushroll casing 12 may be transported into the dust cup 37 through the drive belt mounting cavity 123.

Thus, by disposing the first baffle plate 114 and the second baffle plate 115 at two ends of the connecting shaft segment 113 respectively, a partition plate is easy to be disposed in the brushroll casing 12, so that the brushroll casing 12 is provided with the first air suction flow passage 1221, the second air suction flow passage 1222 and the drive belt mounting cavity 123 spaced from each other, to prevent the dust and debris in the first air suction flow passage 1221 and the second air suction flow passage 1222 from twining around the drive belt 13 and the electric motor shaft 221, and to ensure the stability and reliability of the operation of the drive belt 13 and the electric motor shaft 221, thereby guaranteeing the normal working of the upright vacuum cleaner 1. Furthermore, the first baffle plate 114 and the second baffle plate 115 may ensure the sealing performance of the drive belt mounting cavity 123 to prevent the dust from entering the drive belt mounting cavity 123 and hence avoiding affecting the operation of the drive belt 13.

Specifically, according to an embodiment of the present disclosure, the first brushroll segment 111 includes a first body 1111 and a first bristle 1112 provided to the first body 1111; the second brushroll segment 112 includes a second body 1121 and a second bristle 1122 provided to the second body 1121. Referring to Fig. 14, the first body 1111 and the second body 1121 are formed as columns extending the horizontal direction (the left-right direction shown in Fig. 14), and the first body 1111 and the second body 1121 are disposed coaxially and connected with the left end and the right end of the connecting shaft segment 113 respectively. A side wall of the first body 1111 is provided with the first bristle 1112, and a side wall of the second body 1121 is provided with the second bristle 1122. The two ends of the drive belt 13 are twined around the electric motor shaft 221 of the electric motor 22 and the connecting shaft segment 113 of the brushroll 11 respectively. The electric motor 22 drives the brushroll 11 to rotate around the rotation axis through the drive belt 13. The first bristle 1112 on the first body 1111 and the second bristle 1122 on the second body 1121 are configured to sweep the floor along with the rotation of the brushroll 11. Preferably, the first body 1111 and the second body 1121 each are configured as a column shape; a radial dimension of the first body 1111 is equal to a radial dimension of the second body 1121; the first bristle 1112 and the second bristle 1122 are configured to extend along the radial directions of the first body 1111 and the second body 1121 respectively.

Optionally, a plurality of the first bristles 1112 are provided and each of the first bristles 1112 is spirally coiled around the first body 1111 in the same direction; and a plurality of the second bristles 1122 are provided and each of the second bristles 1122 is spirally coiled around the second body 1121 in the same direction. Referring to Fig. 14, the side wall of the first body 1111 is provided with the plurality of the first bristles 1112 spaced from each other, and each of the first bristles 1112 is spirally coiled around a side circumferential wall of the first body 1111 along the axial direction of the first body 1111; advantageously, the plurality of the first bristles 1112 are spirally coiled around the first body 1111 in the same direction and along the axial direction of the first body 1111. The side wall of the second body 1121 is provided with the plurality of the second bristles 1122 spaced from each other, and each of the second bristles 1122 is spirally coiled around a side circumferential wall of the second body 1121 along the axial direction of the second body 1121; advantageously, the plurality of the second bristles 1122 are spirally coiled around the second body 1121 in the same direction and along the axial direction of the second body 1121. The coiling directions of the first bristle 1112 and the second bristle 1122 may be the same or may be different.

Thus, by providing the first bristle 1112 to the first body 1111, and by providing the second bristle 1122 to the second body 1121, the objective of sweeping dust at the two sides of the drive belt 13 at the same time may be implemented, which enlarges a dust sweeping area of the upright vacuum cleaner 1. In addition, by spirally coiling each of the first bristles 1112 around the first body 1111 in the same direction and by spirally coiling each of the second bristles 1122 around the second body 1121 in the same direction, not only the dust sweeping effect of the brushroll 11 may be improved, but also a beautiful appearance of the brushroll 11 may be ensured.

In some specific embodiments of the present disclosure, the coiling directions of the first bristle 1112 and the second bristle 1122 are contrary. Referring to Fig. 14, each of the first bristles 1112 on the first body 1111 is anticlockwise spirally coiled around the side circumferential wall of the first body 1111 along the axial direction of the first body 1111 from left to right; each of the second bristles 1122 on the second body 1121 is clockwise spirally coiled around the side circumferential wall of the second body 1121 along the axial direction of the second body 1121 from left to right; and the bristles at the left side and the right side are configured to sweep the floor from outside to inside, so as to improve the sweeping effect. Preferably, the electric motor 22 drives the brushroll 11 to rotate clockwise around the rotation axis of the brushroll 11 through the drive belt 13, thus meeting the usage habits of hands and being easy to operate.

In some embodiments of the present disclosure, the end of the drive belt 13 is fitted over the brushroll 11 and located at the middle portion of the brushroll 11. The brushroll 11 at two sides of the drive belt 13 sweeps the dust respectively, then the dust and dirty air are sucked into the first air suction flow passage 1221 and the second air suction flow passage 1222 through the dust suction inlet and enters the dust cup 37 to be filtered, and in the end the clean air is discharged from the air exhaust hole 213 of the electric motor housing 21. It should be noted that, the term "middle portion" is a relative term, which could be interpreted as a portion between a left end and a right end of the brushroll 11, and is not limited to a midpoint of the brushroll 11. Specifically, the middle portion may be a part between the midpoint and the left end of the brushroll 11, and may also be a part between the midpoint and the right end of the brushroll 11.

Preferably, according to an embodiment of the present disclosure, the first brushroll 11 and the second brushroll 11 are symmetrical with respect to the drive belt 13. That is, a length of the first brushroll segment 111 in an axial direction is equal to a length of the second brushroll segment 112 in the axial direction. The first brushroll segment 111 and the second brushroll segment 112 are symmetrical relative to a central portion of the connecting shaft segment 113. The second end of the drive belt 13 is twined around the connecting shaft segment 113 and the first end of the drive belt 13 is twined around the electric motor shaft 221 of the electric motor 22, i.e. the drive belt 13 divides the brushroll 11 into the first brushroll segment 111 and the second brushroll segment 112 which are symmetrical in the left-right direction. Thus, not only the first brushroll segment 111 and the second brushroll segment 112 are subject to balanced resistance so as to ensure the stability of the rotation of the brushroll 11, but also sweeping areas at both sides of the drive belt 13 are equal.

According to an embodiment of the present disclosure, respective center axes of the first brushroll segment 111, the second brushroll segment 112 and the connecting shaft segment 113 are in the same line. That is, the first brushroll segment 111, the second brushroll segment 112 and the connecting shaft segment 113 are disposed coaxially. The electric motor 22 drives the first brushroll segment 111, the second brushroll segment 112 and the connecting shaft segment 113 to rotate at the same time. Thus, the floor brush assembly for the upright vacuum cleaner 1 may drive the fan, the first brushroll segment 111, the second brushroll segment 112 and the connecting shaft segment 113 to rotate at the same time, thus implementing a working mode of dust sweep and dust suction at both sides of the drive belt 13. Compared to the vacuum cleaner of the relate art that controls the fan and the brushroll 11 to rotate by two electric motors 22 respectively, the upright vacuum cleaner 1 has the simple structure and few parts, occupies the small space, and is easy to assemble and disassemble with the high mounting efficiency, and moreover, the synchronous control over the dust sweep and the dust suction may be implemented.

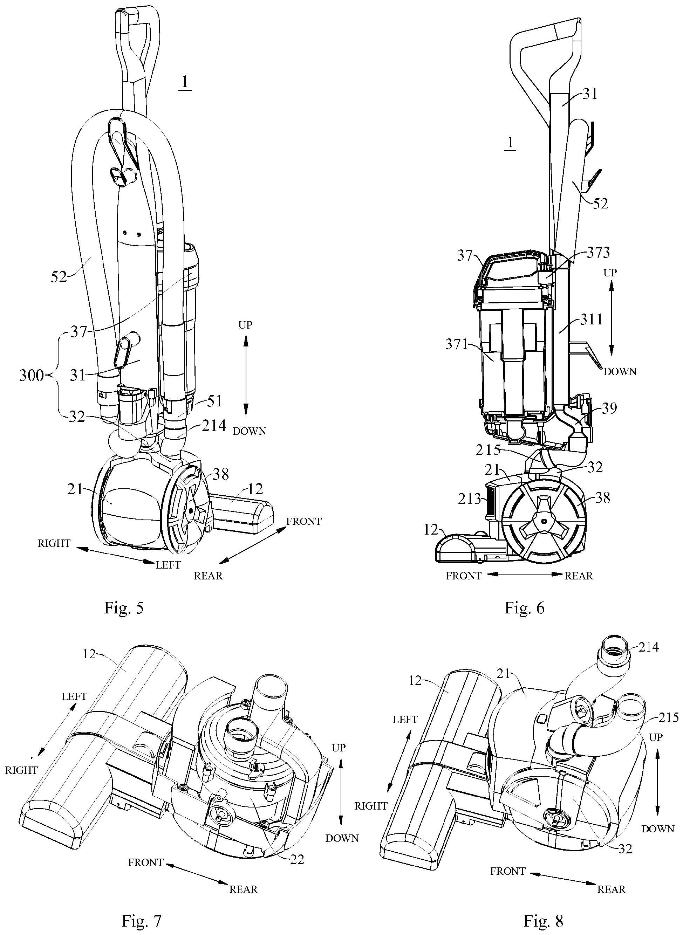

In some specific embodiments of the present disclosure, the floor brush assembly for the upright vacuum cleaner 1 also includes the brushroll casing 12 covering the brushroll 11. The brushroll casing 12 is provided with a drive belt mounting cavity 123 for accommodating the connecting shaft segment 113 and the drive belt 13, and a first air suction flow passage 1221 and a second air suction flow passage 1222 located at two sides of the mounting cavity and spaced apart from the mounting cavity in the brushroll casing 12. Referring to Fig. 7-Fig. 9, the brushroll casing 12 is formed to be T-shaped, in which, the brushroll casing 12 is provided with the first air suction flow passage 1221, the second air suction flow passage 1222 and the drive belt mounting cavity 123 spaced apart from each other in the left-right direction in the brushroll casing 12. The first brushroll segment 111 is rotatably disposed in the first air suction flow passage 1221, the second brushroll segment 112 is rotatably disposed in the second air suction flow passage 1222, and the drive belt 13 is rotatably disposed in the drive belt mounting cavity 123.

The first air suction flow passage 1221 and the second air suction flow passage 1222 which are spaced apart from each other are disposed at the left side and the right side of the drive belt 13 correspondingly, so that dirty air, dust and the like which are sucked from the dust suction inlet of the brushroll casing 12 may enter the first air suction flow passage 1221 and the second air suction flow passage 1222, then converge and flow into the dust cup 37. Specifically, the first air suction flow passage 1221 and the second air suction flow passage 1222 may be defined by parts disposed in the brushroll casing 12, and also may be defined by an inner wall surface of the brushroll casing 12. Certainly, the present disclosure is not limited to this, the first air suction flow passage 1221 and the second air suction flow passage 1222 may also be communicated with each other, i.e. all the space in the brushroll casing 12, apart from the space occupied by the drive belt mounting cavity 123, belongs to the first air suction flow passage 1221 and the second air suction flow passage 1222, and the dirty air, dust and the like which are sucked from the dust suction inlet of the brushroll casing 12 may be transported into the dust cup 37 through the drive belt mounting cavity 123.

Each of the first air suction flow passage 1221 and the second air suction flow passage 1222 includes a transverse air suction flow passage segment and a longitudinal air suction flow passage segment. The transverse air suction flow passage segment extends along an axial direction of the brushroll 11, and the longitudinal air suction flow passage segment extends along a direction which is perpendicular to the axial direction of the brushroll 11 and is communicated with the transverse air suction flow passage segment correspondingly.

Specifically, as shown in Fig. 11, the first air suction flow passage 1221 mainly includes the transverse air suction flow passage segment located at the left side of the connecting shaft segment 113 and the longitudinal air suction flow passage segment located at the left side of the drive belt 13; and the second air suction flow passage 1222 mainly includes the transverse air suction flow passage segment located at the right side of the connecting shaft segment 113 and the longitudinal air suction flow passage segment located at the right side of the drive belt 13. Moreover, a center line of each transverse air suction flow passage segment is perpendicular to a center line of the longitudinal air suction flow passage segment at a corresponding position.

Optionally, the first air suction flow passage 1221 and the second air suction flow passage 1222 are configured to be L-shaped separately and disposed back to back, and the drive belt mounting cavity 123 is located between the first air suction flow passage 1221 and the second air suction flow passage 1222. When the brushroll 11 is mounted in the brushroll casing 12, the first brushroll segment 111 may be rotatably disposed in the first air suction flow passage 1221, the second brushroll segment 112 may be rotatably disposed in the second air suction flow passage 1222, and the electric motor 22 drives the first brushroll segment 111 and the second brushroll segment 112 to rotate synchronously by the drive belt 13.

Preferably, the first air suction flow passage 1221 and the second air suction flow passage 1222 are symmetrically disposed at two sides of the drive belt 13. That is, lengths and sectional areas of the first air suction flow passage 1221 and the second air suction flow passage 1222 at the two sides of the drive belt 13 are equal to each other, i.e. air suction capacities of the first air suction channel 1221 and the second air suction channel 1222 are equal. Thus, the dirty air and the dust sucked from the dust suction inlet enter the dust cup 37 in the electric motor casing 21 evenly through the first air suction flow passage 1221 and the second air suction flow passage 1222 to guarantee the uniformity of dust suction at the two sides of the drive belt 13.

Furthermore, the electric motor housing 21 defines a first branch flow passage 2161 communicated with the first air suction flow passage 1221 and a second branch flow passage 2162 communicated with the second air suction flow passage 1222. Specifically, the electric motor housing 21 is formed as a hollow column, and internally defines the first branch flow passage 2161 and the second branch flow passage 2162 which are spaced apart from each other. The electric motor 22 is located between the first branch flow passage 2161 and the second branch flow passage 2162, in which, a first end of the first branch flow passage 2161 is communicated with the first air suction flow passage 1221, a first end of the second branch flow passage 2162 is communicated with the second air suction flow passage 1222, while a second end of the first branch flow passage 2161 and a second of the second branch flow passage 2162 are communicated with the dust cup 37.

According to an embodiment of the present disclosure, the brushroll casing 12 includes a lower casing 125 and an upper casing 124 connected to a top portion of the lower casing 125, and the first air suction flow passage 1221 and the second air suction flow passage 1222 are defined by the upper casing 124 and/or the lower casing 125. Referring to Fig. 2, the brushroll casing 12 mainly includes the upper casing 124 and the lower casing 125, in which, an lower end of the upper casing 124 is open, and the lower casing 125 is detachably connected to the upper casing 124 so as to close at least a part of an opening of the upper casing 124 and so as to define the dust suction inlet between the upper casing 124 and the lower casing 125. Furthermore, the first air suction flow passage 1221, the drive belt mounting cavity 123 and the second air suction flow passage 1222 spaced apart from each other in the left-right direction are defined between the upper casing 124 and the lower casing 125, and each of the first air suction flow passage 1221 and the second air suction flow passage 1222 is not communicated with the drive belt mounting cavity 123. Thus, debris such as dust may be prevented from being drawn into the drive belt 13, and the reliability of operation of the system is ensured. The brushroll casing 12 has a simple and compact structure, and the first air suction flow passage 1221, the second air suction flow passage 1222 and the drive belt mounting cavity 123 spaced apart from each other are defined by the structures of the upper casing 124 and the lower casing 125, which omits excessive pipes, makes the manufacturing simple and reduces the cost.

The floor brush assembly for the upright vacuum cleaner 1 further includes a tensioning pulley 14, and the tensioning pulley 14 is opposite to the part of the drive belt 13 adjacent to the brushroll 11 so as to tension the drive belt 13, so that the objective of adjusting the tension degree of the drive belt 13 may be implemented, and the reliability of the floor brush assembly may be improved.

In some other specific embodiments of the present disclosure, the floor brush assembly for the upright vacuum cleaner 1 further includes the brushroll casing 12, and the brushroll casing 12 defines a brushroll air suction flow passage 122 and the drive belt mounting cavity 123 for accommodating the drive belt 13. Referring to Fig. 9, the brushroll casing 12 is configured to be T-shaped, that is, the brushroll casing 12 includes a brush casing extending along the horizontal direction (a left-right direction shown in Fig. 11) and a belt casing extending along the vertical direction (a front-rear direction shown in Fig. 11). The brushroll casing 12 defines the drive belt mounting cavity 123 and the brushroll air suction flow passages 122 at two sides of the drive belt mounting cavity 123. The brushroll 11 may be rotatably disposed in the brushroll air suction flow passages 122 and the rotation axis of the brushroll 11 extends along a length direction of the brush casing; the drive belt 13 is rotatably disposed in the drive belt mounting cavity 123. Further, the brushroll air suction flow passages 122 are separated from the drive belt 13. The second end of the drive belt 13 is fitted over the brushroll 11, and the first end of the drive belt 13 is fitted over the electric motor shaft 221. By separating the drive belt mounting cavity 123 from the brushroll air suction flow passages 122, the dust and the debris in the brushroll air suction flow passages 122 may be prevented from being twined around the drive belt 13 and the electric motor shaft 221, so as to ensure the stability and reliability of operation of the drive belt 13 and the electric motor 22, thereby guaranteeing the normal working of the upright vacuum cleaner 1.

The brushroll air suction flow passages 122 includes the first air suction flow passage 1221 and the second air suction flow passage 1222 at the two sides of the drive belt mounting cavity 123. Referring to Fig. 11 and Fig. 12, the first air suction flow passage 1221 and the second air suction flow passage 1222 are disposed at the left side and the right side of the drive belt 13 correspondingly, and the dirty air and the dust inhaled from the brushroll casing 12 may enter the dust cup 37 through the first air suction flow passage 1221 and the second air suction flow passage 1222. The first air suction flow passage 1221 and the second air suction flow passage 1222 may be spaced apart from each other and disposed at the left side and the right side of the drive belt 13 correspondingly, so that dirty air, dust and the like which are sucked from the dust suction inlet of the brushroll casing 12 may enter the first air suction flow passage 1221 and the second air suction flow passage 1222, then converge and flow into the dust cup 37.

Optionally, the first air suction flow passage 1221 and the second air suction flow passage 1222 may be defined by parts disposed in the brushroll casing 12, and also may be defined by an inner wall surface of the brushroll casing 12. Certainly, the present disclosure is not limited to this, the first air suction flow passage 1221 and the second air suction flow passage 1222 may also be communicated with each other, i.e. all the space in the brushroll casing 12, apart from the space occupied by the drive belt mounting cavity 123, belongs to the first air suction flow passage 1221 and the second air suction flow passage 1222, and the dirty air, dust and the like which are sucked from the dust suction inlet of the brushroll casing 12 may be transported into the dust cup 37 through the drive belt mounting cavity 123. Thus, by disposing the first air suction flow passage 1221 and the second air suction flow passage 1222 at the two sides of the drive belt 13, the effect of dust suction at two sides of the drive belt 13 may be achieved, the area of dust suction may be enlarged, and the working efficiency of the upright vacuum cleaner 1 may be improved.

Each of the first air suction flow passage 1221 and the second air suction flow passage 1222 includes the transverse air suction flow passage segment and the longitudinal air suction flow passage segment; the transverse air suction flow passage segment extends along the axial direction of the brushroll 11, and the longitudinal air suction flow passage segment extends along the direction which is perpendicular to the axial direction of the brushroll 11 and communicated with the transverse air suction flow passage segment correspondingly.

Referring to Fig. 14, the brushroll 11 includes the first brushroll segment 111 provided with bristles, the second brushroll segment 112 provided with bristles, and the connecting shaft segment 113 connected between the first brushroll segment 111 and the second brushroll segment 112. The drive belt 13 is twined around the electric motor shaft 221 of the electric motor 22 and the connecting shaft segment 113 so that the electric motor 22 drives the brushroll 11 to rotate. The first air suction flow passage 1221 mainly includes the transverse air suction flow passage segment located at the left side of the connecting shaft segment 113 and the longitudinal air suction flow passage segment located at the left side of the drive belt 13, the second air suction flow passage 1222 mainly includes the transverse air suction flow passage segment located at the right side of the connecting shaft segment 113 and the longitudinal air suction flow passage segment located at the right side of the drive belt 13, moreover, the center line of each the transverse air suction flow passage segment and the center line of the longitudinal air suction flow passage segment are perpendicular to each other at a corresponding position.

Optionally, the first air suction flow passage 1221 and the second air suction flow passage 1222 are configured to be L-shaped separately and disposed back to back, and the drive belt mounting cavity 123 is located between the first air suction flow passage 1221 and the second air suction flow passage 1222. When the brushroll 11 is mounted in the brushroll casing 12, the electric motor 22 drives the brushroll 11 to rotate through the drive belt 13, thereby implementing the objective of sweeping the floor. By disposing the first air suction flow passage 1221 and the second air suction flow passage 1222 at the two sides of the drive belt 13, the effect of dust suction at two sides of the drive belt 13 may be achieved, the area of dust suction may be enlarged, and the working efficiency of the upright vacuum cleaner 1 may be improved.

The upright vacuum cleaner 1 according to embodiments of the second aspect of the present disclosure includes the floor brush assembly according to the above embodiments. The upright vacuum cleaner 1 includes an air inlet pipe assembly, and the air inlet pipe assembly mainly includes an air inlet pipe 51 and a hose 52. The air inlet pipe 51 is fixed to the electric motor housing 21 and has a first end communicated with a dirty air outlet 211 in the electric motor housing 21, a first end of the hose 52 is communicated with a second end of the air inlet pipe 51, and a second other end of the hose 52 is communicated with a separating chamber 371 of the dust cup 37. Advantageously, a length of the hose 52 may be larger than a length of the machine body 31, so as to extend the separation time and the filtration time of the dust and dirty air, thus increasing the dust suction capacity, so as to improve the working efficiency of the upright vacuum cleaner 1. Further, a middle portion of the hose 52 may be hung on the machine body 31 to make the structure compact. Optionally, the hose 52 may be configured as a plastic hose 52, or a rubber hose 52, so that coiling of the hose 52 is convenient, thereby saving the space and improving the space utilization.

As the floor brush assembly for the upright vacuum cleaner 1 according to embodiments of the present disclosure has the above technical effects, the upright vacuum cleaner 1 according to embodiments of the present disclosure has also the above technical effects. That is, the electric motor 22 of the upright vacuum cleaner 1 may control rotations of the brushroll 11 and the fan at the same time, the number of parts is reduced, the occupied space is small, and the synchronous control over dust sweep and dust suction may be implemented. The upright vacuum cleaner 1 has a simple and compact structure, occupies a small space and is easy to operate. Furthermore, the electric motor of the upright vacuum cleaner 1 is arranged vertically, which may reduce the occupied space of the upright vacuum cleaner 1 and facilitate diverse arrangements of various parts of the upright vacuum cleaner 1.

A structure and a working process of the upright vacuum cleaner 1 according to embodiments of the present disclosure will be described in detail with reference to the drawings in the following.

As shown in Fig. 1-Fig. 16, the upright vacuum cleaner 1 mainly includes the floor brush assembly, the machine body assembly 300, a clutch device (not shown) and a rolling wheel 38. The floor brush assembly mainly includes the brushroll assembly 100 and the electric motor assembly 200.

Specifically, the brushroll assembly 100 mainly includes the brushroll 11 and the brushroll casing 12, and the brushroll casing 12 mainly includes the upper casing 124 and the lower casing 125. The drive belt mounting cavity 123, and the first air suction flow passage 1221 and the second air suction flow passage 1222 located at two sides of the drive belt mounting cavity 123 are defined in the brushroll casing 12. The brushroll 11 is rotatably disposed in the brushroll casing 12, the drive belt 13 is movably disposed in the drive belt mounting cavity 123 and the second end of the drive belt 13 is twined around the central portion of the brushroll 11. Referring to Fig. 14, the brushroll 11 mainly includes the first brushroll segment 111, the second brushroll segment 112 and the connecting shaft segment 113 which are disposed coaxially. The first brushroll segment 111 and the second brushroll segment 112 are connected to the two ends of the connecting shaft segment 113 correspondingly. The first brushroll segment 111 mainly includes a first body 1111 and a first bristle 1112 provided to the first body 1111. The second brushroll segment 112 mainly includes a second body 1121 and a second bristle 1122 provided to the second body 1121. The second end of the drive belt 13 is twined around the connecting shaft segment 113 of the brushroll 11, and further, the brushroll casing 12 is provided with the tensioning pulley 14 so as to tension the drive belt 13.

The electric motor assembly 200 mainly includes the electric motor housing 21, the electric motor 22 and the fan (not shown). The electric motor housing 21 defines an electric motor air suction flow passage 216 and an electric motor air exhaust flow passage which are spaced from each other, and the electric motor housing 21 is provided with the dirty air outlet 211 communicated with the electric motor air suction flow passage 216 and a clean air inlet 212 communicated with the electric motor air exhaust flow passage. The electric motor 22 is vertically disposed in the electric motor housing 21 and is rotatable with respect to the electric motor housing 21, that is, the electric motor shaft 221 of the upright vacuum cleaner 1 is arranged along the vertical direction. The electric motor 22 is disposed in rear of the brushroll 11, and the electric motor shaft 221 of the electric motor 22 is connected with the brushroll 11 through the drive belt 13.

Specifically, the first end of the drive belt 13 is fitted over the electric motor shaft 221 of the electric motor 22, the second end of the drive belt 13 is fitted over brushroll 11. When the electric motor shaft 221 of the electric motor 22 rotates, the electric motor shaft 221 drives the drive belt 13 to rotate, and then the drive belt 13 drives the brushroll 11 to rotate around its own rotation axis. Thus, the electric motor 22 is able to drive the brushroll 11 to rotate. Referring to Fig. 10, as the axial direction of the electric motor shaft 221 of the electric motor 22 is non-parallel to the axial direction of the brushroll 11, the drive belt 13 between the brushroll 11 and the electric motor shaft 221 is twisted once with the twist angle of 30°-90°. Furthermore, the electric motor 22 may drive the fan to rotate so as to generate the air flow for dust suction, thereby providing upright vacuum cleaner 1 with the vacuuming power. The electric motor 22 may also drive the brushroll 11 to rotate around its own rotation axis, thereby implementing the objective of cleaning the floor.

The machine body assembly 300 mainly includes the machine body 31, the bridging member 32 and the dust cup 37. The dust cup 37 and the bridging member 32 are provided to the machine body 31, and the bridging member 32 is connected with the lower end of the machine body 31. Referring to Fig. 16, the bridging member 32 mainly includes two lateral plates 322 and a top plate 321 disposed between the two lateral plates 322, and the two lateral plates 322 of the bridging member 32 are disposed outside a lateral wall of the electric motor housing 21 and are rotatably connected with the electric motor housing 21. The rotatable rolling wheel 38 is disposed outside the two lateral plates 322 of the bridging member 32, so that the user may push the upright vacuum cleaner 1 easily. The separating chamber 371 is defined in the dust cup 37, and the dust cup 37 is provided with an air inlet 372 and an air outlet 373 in communication with the separating chamber 371. The machine body air exhaust flow passage 311 is defined in the machine body 31. An air exhaust pipe 39 is disposed between the machine body 31 and the electric motor housing 21, two ends of the air exhaust pipe 39 are communicated with the machine body air exhaust flow passage 311 of the machine body 31 and the clean air inlet 212 of the electric motor housing 21 respectively. The dust and debris sucked from the dust suction inlet of the brushroll casing 12 enter the electric motor air suction flow passage 216 in the electric motor housing 21 through the first air suction flow passage 1221 and the second air suction flow passage 1222, and then enter the separating chamber 371 of the dust cup 37 for filtering process. The obtained clean air is discharged into the electric motor air exhaust flow passage in the electric motor housing 21 from the air outlet 373 of the dust cup 37 and is discharged to the external environment from an air exhaust hole 213 of the electric motor housing 21.

A triggering member of the clutch device is rotatably provided to the electric motor housing 21 and is fitted with the bridging member 32 and the electric motor casing 222 of the electric motor 22, so that it is attainable that the bridging member 32 drives the clutch device to rotate and the clutch device drives the electric motor 22 to rotate.

Referring to Fig. 1, under a non-working state, the upright vacuum cleaner 1 may be vertically placed on the floor, that is, the machine body 31 of the upright vacuum cleaner 1 is at the second vertical position, which occupies the small space. When the user needs to use the upright vacuum cleaner 1, the handle of the machine body 31 may be held by hand so that the upright vacuum cleaner 1 may be pushed to work. Firstly, the switch on the upright vacuum cleaner 1 may be switched on by hand, in which case the drive belt 13 is in the loosened state, and the electric motor 22 is unable to drive the brushroll 11 to rotate, i.e. the upright vacuum cleaner 1 is in a standby state where the brushroll 11 does not sweep the dust. Then the machine body 31 is rotated from the second vertical position to the second inclined position by hand, and in this process, the bridging member 32 on the electric motor housing 21 rotates clockwise along with the machine body 31 with respect to the electric motor housing 21. Hence, the bridging member 32 is able to drive the electric motor 22 in the electric motor housing 21 to rotate through the clutch device on the electric motor housing 21, i.e. the electric motor 22 rotates from the first inclined position to the first vertical position, and in this process, the lower end of the electric motor shaft 221 moves backwards gradually, so that the distance between the lower end of the electric motor shaft 221 and the brushroll 11 is increased, thereby tensioning the drive belt 13. The electric motor 22 may drive the brushroll 11 to rotate through the drive belt 13, thus reaching the objective of starting the actions of dust sweep and dust suction. Certainly, the present disclosure is not limited to this, the user may rotate the machine body 31 from the second vertical position to the second inclined position directly, in this process, the drive belt 13 is tensioned gradually, and then the switch of the upright vacuum cleaner 1 is switched on, thus reaching the objective of triggering the actions of dust sweep and dust suction at the same time.

That is, the user just needs to turn on the switch to start or stop dust sweep by manipulating the direction of the handle of the machine body 31. The operation is simple without need to operate a control panel. Optionally, the switch may be provided to the handle of the machine body 31 to facilitate manual operations, and may also by provided to the brushroll casing 12 or the electric motor housing 21 located below the machine body 31 to make it convenient for the user to switch on the switch by foot. The electric motor 22 may be disposed adjacent to the floor, i.e. the center of gravity of the electric motor 22 is lower than the center of gravity of the electric motor 22 in the vacuum cleaner of the related art, such that with respect to the vacuum cleaner having the machine 31 of the same length, the user may operate the upright vacuum cleaner 1 of the present disclosure more effortlessly and conveniently.

When the upright vacuum cleaner 1 is under the working state, the dirty air, the dust and the like enter the brushroll air suction flow passage 122 from the dust suction inlet of the brushroll casing 12, then enter the the electric motor air suction flow passage 216 in the electric motor housing 21 and is discharged into the machine body assembly 300 through a dirty air output pipe 214 on the electric motor housing 21. The clean air filtered by the machine body assembly 300 enters the electric motor air exhaust flow passage in the electric motor housing 21 through a clean air input pipe 215 of the electric motor housing 21. The air exhaust pipe 39 is disposed between the machine body 31 and the electric motor housing 21, the two ends of the air exhaust pipe 39 are communicated with the machine body air exhaust flow passage 311 of the machine body 31 and the clean air inlet 212 of the electric motor housing 21 respectively. The clean air filtered by the dust cup 37 passes through the machine body air exhaust flow passage 311, the air exhaust pipe 39 and the clean air inlet 212 successively, enters the electric motor air exhaust flow passage in the electric motor housing 21, and is discharged to the external environment through the air exhaust hole 213 of the electric motor housing 21.

It should be noted that, when the machine body 31 is operated from the second vertical position to the second inclined position with the predetermined angle, the electric motor 22 may rotate synchronously with the machine body 31. When the electric motor 22 rotates by the predetermined angle, the machine body 31 may be operated freely by hand without influencing the tensioned state of the drive belt 13. That is, when the electric motor 22 rotates from the first inclined position to the first vertical position, the machine body 31 may be operated freely by hand without influencing the dust sweep and the dust suction of the upright vacuum cleaner 1. Certainly, the present disclosure is not limited to this, and the rotation angle of the machine body 31 may also be directly related to the rotation angle of the electric motor 22. That is, by adjusting the inclined angle of the machine body 31, the adjustment of the position state of the electric motor 22 may be implemented by hand, thereby realizing the objective of adjusting the tension degree of the drive belt 13.

Other configurations and operations of the upright vacuum cleaner 1 according to embodiments of the present disclosure are known to those skilled in the art, which will not be elaborated herein.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A floor brush assembly for an upright vacuum cleaner comprising:
a brushroll; and
an electric motor, having a rotation axis disposed non-parallel to a rotation axis of the brushroll, and configured to drive the brushroll to roll by a drive belt.

2. The floor brush assembly according to claim 1, wherein the drive belt is configured as a cylindrical belt and is twined around an electric motor shaft of the electric motor and the brushroll.

3. The floor brush assembly according to claim 1, wherein the drive belt is configured as a flat belt or a trapezoidal belt and is twined around an electric motor shaft of the electric motor, the brushroll and at least one guide pulley.

4. The floor brush assembly according to claim 2 or 3, wherein contact points between the drive belt and parts twined by the drive belt are configured as alterable contact points, and a twist angle of the drive belt between two adjacent alterable contact points is configured to range from 30° to 90°.

5. The floor brush assembly according to claim 1 or 2, wherein the rotation axis of the electric motor is disposed perpendicular to the rotation axis of the brushroll, and the drive belt is provided with a twist angle of 90°.

6. The floor brush assembly according to any one of claims 1-5, wherein the electric motor shaft of the electric motor is disposed vertically.

7. The floor brush assembly according to claim 2, further comprising:
a stopper disposed below the drive belt and adjacent to the electric motor so as to prevent the drive belt from falling off and slipping off from the electric motor shaft.

8. The floor brush assembly according to any one of claims 1-7, wherein the drive belt is twined around a midpoint portion in the axial direction of the brushroll.

9. The floor brush assembly according to any one of claims 1-8, wherein the brushroll comprises a first brushroll segment provided with bristles, a second brushroll segment provided with bristles and a connecting shaft segment connected between the first brushroll segment and the second brushroll segment, and the drive belt is twined around the electric motor shaft of the electric motor and the connecting shaft segment so that the electric motor drives the brushroll to rotate.

10. The floor brush assembly according to claim 9, wherein the brushroll further comprises:
a first baffle plate disposed between the connecting shaft segment and the first brushroll segment so as to separate the connecting shaft segment from the first brushroll segment; and
a second baffle plate disposed between the connecting shaft segment and the second brushroll segment so as to separate the connecting shaft segment from the second brushroll segment.

11. The floor brush assembly according to any one of claims 9-10, wherein the first brushroll segment comprises a first body and a first bristle provided to the first body, and the second brushroll segment comprises a second body and a second bristle provided to the second body.

12. The floor brush assembly according to claim 11, wherein a plurality of the first bristles are provided and each of the first bristles is spirally coiled around the first body in a common direction, a plurality of the second bristles are provided and each of the second bristles is spirally coiled around the second body in a common direction.

13. The floor brush assembly according to claim 12, wherein coiled directions of the first bristles and the second bristles are contrary.

14. The floor brush assembly according to any one of claims 9-13, wherein the first brushroll segment and the second brushroll segment are symmetrical relative to the drive belt.

15. The floor brush assembly according to any one of claims 9-14, wherein respective center axes of the first brushroll segment, the second brushroll segment and the connecting shaft segment are in the same line.

16. The floor brush assembly according to any one of claims 9-15, further comprising:
a brushroll casing covering the brushroll, and internally provided with a drive belt mounting cavity for accommodating the connecting shaft segment and the drive belt, and a first air suction flow passage and a second air suction flow passage located at two sides of the mounting cavity and spaced from the mounting cavity.

17. The floor brush assembly according to claim 16, wherein each of the first air suction flow passage and the second air suction flow passage comprises a transverse air suction flow passage segment and a longitudinal air suction flow passage segment, the transverse air suction flow passage segment extends along an axial direction of the brushroll, and the longitudinal air suction flow passage segment extends along a direction perpendicular to the axial direction of the brushroll and communicated with the transverse air suction flow passage segment correspondingly.

18. The floor brush assembly according to claim 16 or 17, wherein the brushroll casing comprises a lower casing and an upper casing connected to a top portion of the lower casing, and the first air suction flow passage and the second air suction flow passage are defined by the upper casing and/or the lower casing.

19. The floor brush assembly according to any one of claims 1-18 further comprising:
a tensioning pulley opposite to a part of the drive belt adjacent to the brushroll so as to tension the drive belt.

20. The floor brush assembly according to any one of claims 1-8 further comprising:
a brushroll casing covering the brushroll, and internally provided with a brushroll air suction flow passage and a drive belt mounting cavity for mounting the drive belt, the brushroll air suction flow passage being separated from the drive belt.

21. The floor brush assembly according to claim 20, wherein the brushroll air suction flow passage comprises a first air suction flow passage and a second air suction flow passage at two sides of the drive belt mounting cavity.

22. The floor brush assembly according to claim 16 or 20, wherein the first air suction flow passage and the second air suction flow passage are symmetrically disposed at two sides of the drive belt.

23. An upright vacuum cleaner comprising a floor brush assembly according to any one of claims 1-22.
